# EUROPÄISCHE PATENTSCHRIFT

(11) **EP 1 257 145 B1**
(45) Veröffentlichungstag und Bekanntmachung des Hinweises auf die Patenterteilung: **07.12.2005**
(21) Anmeldenummer: 02360137.0
(22) Anmeldetag: 29.04.2002
(51) Int. Cl.: H04Q 11/04

(54) **Verfahren und Vorrichtungen zur Datenübertragung mit zeitlich veränderlicher Datenrate**
Method and apparatus for data transmission with time-dependent data rates
Méthode et dispositif de transmission de données à débit dépendant du temps

(30) Priorität: 12.05.2001 DE 10123193
(43) Veröffentlichungstag der Anmeldung: 13.11.2002
(73) Patentinhaber: ALCATEL, 75008 Paris (FR)
(72) Erfinder: Wajda, Wieslawa, 75210 Keltern (DE)
(74) Vertreter: Brose, Gerhard

(56) Entgegenhaltungen:
- EP-A- 0 892 581
- GB-A- 2 326 794
- US-A- 5 463 629
- US-A- 5 574 861
- US-A- 6 038 230

## Beschreibung

Die vorliegende Erfindung betrifft ein Verfahren zur Durchführung einer Datenübertragung mit zeitlich veränderlicher Datenrate gemäß dem Oberbegriff des Anspruches 1, ein Kommunikationsmodul für eine Teilnehmer-Einrichtung zur Durchführung einer derartigen Datenübertragung gemäß dem Oberbegriff des Anspruches 7, sowie ein Verbindungssteuermodul für eine Netzwerkeinrichtung eines Netzwerks zur Durchführung einer derartigen Datenübertragung gemäß dem Oberbegriff des Anspruches 9.

Insoweit ist ein derartiges Verfahren und sind derartige Module bekannt, unter anderem aus US 6,038,230, EP 0 892 581 A2 und GB 2 326 794 A.

Bei Telefon-Netzwerken ist es bekannt, dass eine Teilnehmer-Einrichtung, beispielsweise ein Telefonapparat, eine Verbindung zu einem Kommunikationspartner, beispielsweise einem zweiten Telefonapparat, über das Telefon-Netzwerk aufbaut, wobei für die Verbindung eine garantierte Datenrate bereitgestellt wird. Wird die Verbindung beispielsweise über ein ISDN-Telefon-Netzwerk (ISDN = Integrated Services Digital Network), steht für die Verbindung zumindest ein B-Kanal mit üblicherweise 64 kbit/s zur Verfügung, so dass eine zur Sprachübertragung ausreichende Datenrate vorhanden ist. Das Telefon-Netzwerk reserviert die Datenrate für die Verbindung unabhängig davon, ob sie auch tatsächlich genutzt wird. Beispielsweise wird die Verbindung auch bei Gesprächspausen gehalten.

Eine ähnliche Situation ergibt sich, wenn von einer Teilnehmer-Einrichtung, beispielsweise von einem Personal Computer, eine Verbindung über ein Telefon-Netzwerk zum Internet hergestellt wird. Selbst wenn die Verbindung über das Telefon-Netzwerk nicht durch vom Internet an die Teilnehmer-Einrichtung oder umgekehrt übertragene Daten ausgelastet wird, beispielsweise weil im Internet ein Engpass auftritt, stellt das Telefon-Netzwerk für die Verbindung zwischen Teilnehmer-Einrichtung und Internet eine gleichbleibende garantierte Datenrate bereit.

Die Kapazität eines Telefon-Netzwerkes muss demnach für eine maximal auftretende Spitzenlast ausgelegt werden.

Bei paketorientierten Datennetzen, insbesondere verbindungslosen Datennetzen, ergibt sich diesbezüglich eine andere Ausgangssituation. Solche Datennetze sind sozusagen von Hause aus in Bezug auf die zu übertragende Datenart oder die Bandbreite, die einem Teilnehmer zur Verfügung gestellt wird, flexibel und können somit optimal ausgelastet werden. Stehen mehr Datenpakete zur Übertragung an, als das Datennetzwerk jeweils momentan verarbeiten kann, werden diese Datenpakete teilnehmerseitig und/oder netzseitig gepuffert oder verworfen, bis wieder eine ausreichende Übertragungskapazität zur Verfügung steht.

Wenn ein Teilnehmer beispielsweise mit einem Internet-Browser im Internet "surft" und dabei lediglich Text- und Bilddaten aus dem Internet abruft oder einzelne Steuerbefehle, beispielsweise Anforderungen von solchen Bilddaten, an das Internet sendet, sind Zeitverzögerungen durch unzureichende Übertragungskapazität seitens des Internets und/oder eines Zugangsnetzes zum Internet für den Teilnehmer nicht besonders störend. Ein etwas langsamerer Bildaufbau im Browser oder eine etwas verzögerte Reaktion bei einer Anforderung von Daten aus dem Internet sind jedenfalls im Allgemeinen akzeptabel.

Anders verhält es sich, wenn der Teilnehmer beispielsweise eine Video-Sequenz oder Sprachdaten aus dem Internet abruft oder dorthin versenden will. Wenn dem Teilnehmer dann zu wenig Übertragungskapazität bereitgestellt wird, also die Datenrate bei der Übertragung zu gering ist, kann dies zu stockenden und/oder in einzelne Fetzen zerrissene Video- bzw. Sprachsequenzen führen.

Es ist daher Aufgabe der Erfindung, Verfahren und Vorrichtungen zur Durchführung einer Datenübertragung mit zeitlich veränderlicher Datenrate zu schaffen, so dass einer Teilnehmer-Einrichtung, die über ein Netzwerk eine Verbindung aufgebaut hat, stets eine garantierte Datenrate bereitgestellt wird und zudem die Ressourcen des Netzwerks optimal ausgelastet werden.

Diese Aufgabe wird gelöst durch ein Verfahren gemäß der technischen Lehre des Anspruches 1, ein Kommunikationsmodul für eine Teilnehmer-Einrichtung gemäß der technischen Lehre des Anspruches 8 sowie durch ein Verbindungeteuermodul für eine Netzwerkeinrichtung eines Netzwerks gemäß der technischen Lehre des Anspruches 10.

Der Grundgedanke der Erfindung liegt darin, dass einer Teilnehmer-Einrichtung auf einer über das Netzwerk aufgebauten Verbindung zu einem Kommunikationspartner, beispielsweise einem weiteren Teilnehmer-Endgerät und/oder einem Datenserver, stets eine garantierte Datenrate bereitgestellt wird. Soweit die Teilnehmer-Einrichtung die Datenrate momentan nicht nutzt, beispielsweise weil die Datenrate an sich zur Übertragung für Videodaten vorgesehen ist, die Teilnehmer-Einrichtung jedoch momentan nur eine Sprachübertragung durchführt, wird der nicht genutzte Anteil für eine zweite Datenübertragung freigegeben. Das Netzwerk kann die somit freigegebene Übertragungskapazität zur Übertragung von Daten nutzen, die weitere Teilnehmer-Einrichtungen betreffen. Sofern jedoch die Teilnehmer-Einrichtung, die ursprünglich eine garantierte Datenrate angefordert hatte, diese wieder benötigt, im obigen Beispiel anschließend an die Sprachübertragung wieder Videodaten übertragen will, stellt das Netzwerk wiederum die gesamte garantierte Datenrate einschließlich des zuvor freigegebenen Anteils für die Teilnehmer-Einrichtung bereit. Dadurch, dass der Teilnehmer-Einrichtung stets die jeweils erforderliche Datenrate, gegebenenfalls bis hin zur garantierten Datenrate, zur Verfügung steht, "merkt" die Teilnehmer-Einrichtung sozusagen gar nicht, dass ihr temporär ein momentan von ihr nicht genutzter Anteil an der garantierten Datenrate nicht zur Verfügung steht. Jedenfalls wird auf diese Weise die Übertragungskapazität des Netzwerkes optimal ausgenutzt, ohne die Übertragungsqualität für die Teilnehmer-Einrichtung zu beeinträchtigen.

Für die Ermittlung des momentan nicht genutzten Anteils an der garantierten Datenrate sind mehrere Varianten denkbar:

Zum einen kann die momentan nicht genutzte Datenrate und/oder die tatsächlich erforderliche Datenrate teilnehmerseitig und/oder netzwerkseitig ermittelt werden. Beispielsweise kann die Teilnehmer-Einrichtung und/oder ein durch diese ausgeführtes Programmmodul, zum Beispiel ein Browser oder ein Kommunikationsmodul, dem Netzwerk, insbesondere einer Netzwerkeinrichtung, mitteilen, welche Datenrate für eine unmittelbar bevorstehende Datenübertragung erforderlich ist. Wenn die garantierte Datenrate beispielsweise zur Übertragung von Videodaten ausreichend ist, seitens der Teilnehmer-Einrichtung jedoch nur Sprach- oder Textdaten angefordert werden, wird dies dem Netzwerk seitens der Teilnehmer-Einrichtung mitgeteilt. Das Netzwerk kann dann den von der Teilnehmer-Einrichtung momentan nicht benötigten Anteil an der garantierten Datenrate anderweitig nutzen.

Es ist aber auch vorteilhaft möglich, dass seitens des Netzwerkes ermittelt wird, welche Datenrate von der jeweiligen Teilnehmer-Einrichtung tatsächlich genutzt wird. Dazu könnten beispielsweise Datenpakete, die von der Teilnehmer-Einrichtung gesendet werden, überwacht werden. Wird beispielsweise ein Datenstrom, der von der Teilnehmer-Einrichtung gesendet oder empfangen wird, mit zeitlich veränderlicher Datenrate übertragen, so kann dies durch das Netzwerk, insbesondere durch eine Kontrolleinrichtung des Netzwerkes, ermittelt werden. So können z.B. zwischen den zu übertragenden Datenpaketen des Datenstromes längere Pausen sein und/oder mangels zu übertragender Daten Leer-Pakete oder -Zellen übertragen werden. Jedenfalls kann das Netzwerk diese Lücken bzw. Leer-Pakete ermitteln und zu einer oder mehreren weiteren Datenübertragungen nutzen. Beispielsweise können in die Lücken eines Datenstroms Datenpakete eingefügt werden oder anstelle von Leer-Paketen oder Leer-Zellen Nutzdaten-Pakete oder -Zellen übertragen werden.

Vorzugsweise ist vorgesehen, dass die im Rahmen der garantierten Datenrate übertragenen Daten eine hohe Dienstqualität aufweisen. Dies können beispielsweise Echtzeitdaten sein, die im Rahmen einer Sprach- und/oder Videokommunikation zwischen zwei Teilnehmer-Einrichtungen übertragen werden.

Diejenigen Daten hingegen, die nur dann übertragen werden, wenn die garantierte Datenrate von der Teilnehmer-Einrichtung nicht benötigt wird, sind vorzugsweise Daten mit einer vergleichsweise geringen Dienstqualität, beispielsweise reine Text-Daten oder dergleichen.

Eine weitere zweckmäßige Ausgestaltung der Erfindung sieht vor, dass die im Rahmen der Verbindung mit garantierter Datenrate übertragenen Daten mit einem verbindungsorientierten Protokoll übertragen werden. Bei den lediglich fallweise übertragenen Daten, die nur dann übertragen werden, wenn die garantierte Datenrate nicht genutzt wird, kann hingegen zweckmäßigerweise ein verbindungsloses Protokoll vorgesehen sein. Es versteht sich jedoch, dass auch in beiden Fällen verbindungslose Protokolle oder verbindungsorientierte Protokolle zum Einsatz kommen können. Verbindungsorientierte Protokolle bieten sich insbesondere deshalb an, weil sie eine garantierte, kontinuierliche Datenübertragung ermöglichen, wie sie beispielsweise zur Übertragung von Video- oder Sprachsequenzen zweckmäßig ist. Verbindungslose Protokolle erlauben eine dynamischere Nutzung von Übertragungskapazität, wobei diese vorher nicht reserviert werden muss. Allerdings ist eine Fehlerbehandlung bei der Datenübertragung, gegebenenfalls eine Nachforderung von Daten, wenn Daten verloren gegangen sind, durch das Protokoll selbst noch nicht gewährleistet und muss gegebenenfalls durch die an der Datenübertragung beteiligten Endeinrichtungen durchgeführt werden. Vorteilhafte Ausgestaltungen der Erfindung finden sich in den abhängigen Ansprüchen sowie in der Beschreibung.

Es versteht sich, dass auch beliebige Kombinationen der in den Ansprüchen sowie in der Beschreibung angegebenen Maßnahmen und Anordnungen möglich sind.

Im Folgenden werden die Erfindung und ihre Vorteile anhand eines Ausführungsbeispiels unter Zuhilfenahme der Zeichnung dargestellt.

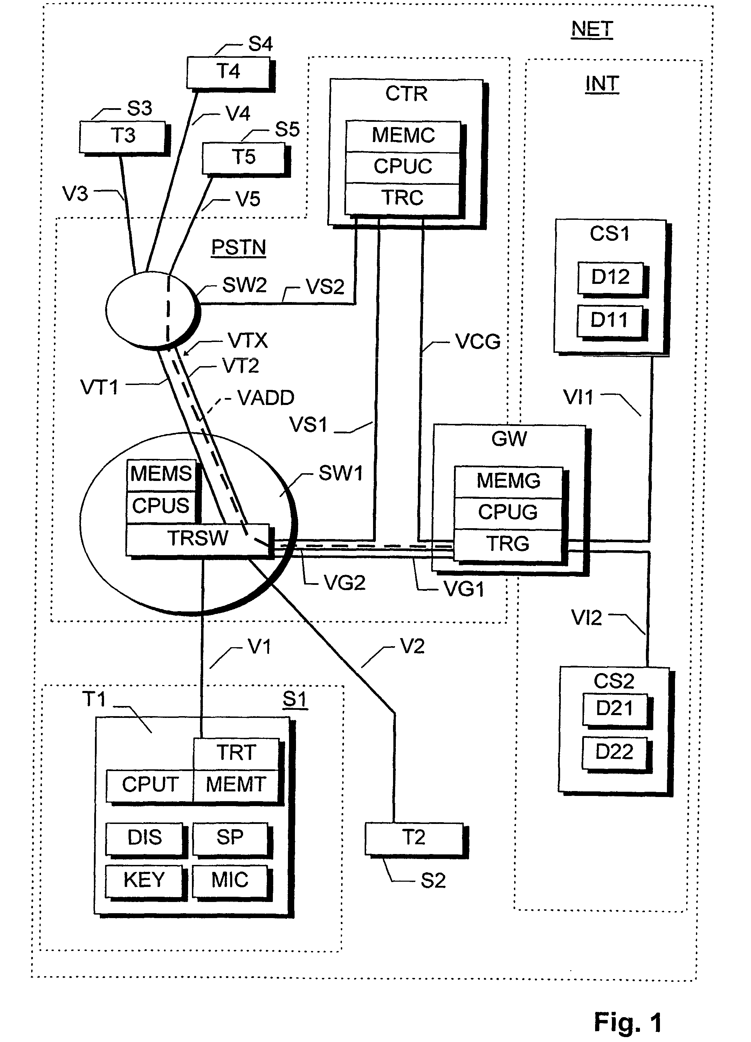

- Fig. 1: zeigt ein Netzwerk NET, an das Teilnehmer-Einrichtungen T1 bis T5 angeschlossen sind, die über das Netzwerk NET Verbindungen untereinander sowie zu Datenservern CS1, CS2 aufbauen können.

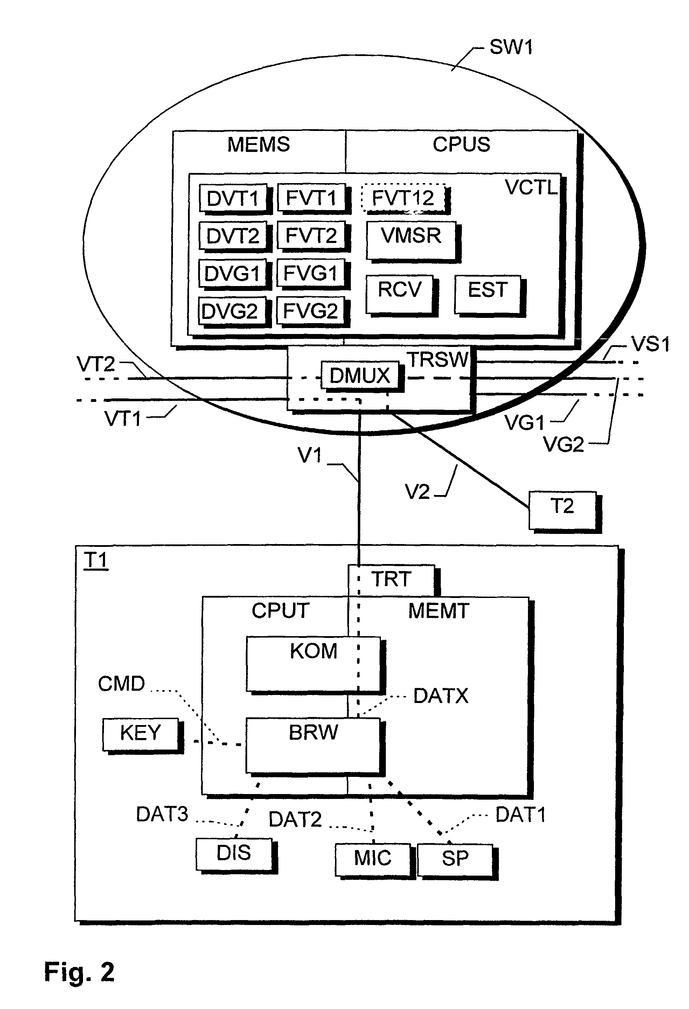

- Fig. 2: zeigt eine detailliertere Ansicht der Teilnehmer-Einrichtung T1, die ein erfindungsgemäßes Kommunikationsmodul KOM enthält und ausführt, sowie einen mit der Teilnehmer-Einrichtung T1 verbundenen erfindungsgemäßen Netzknoten SW1, der in dem Netzwerk NET enthalten ist und ein verbindungsgemäßes Steuermodul VCTL enthält und ausführt.

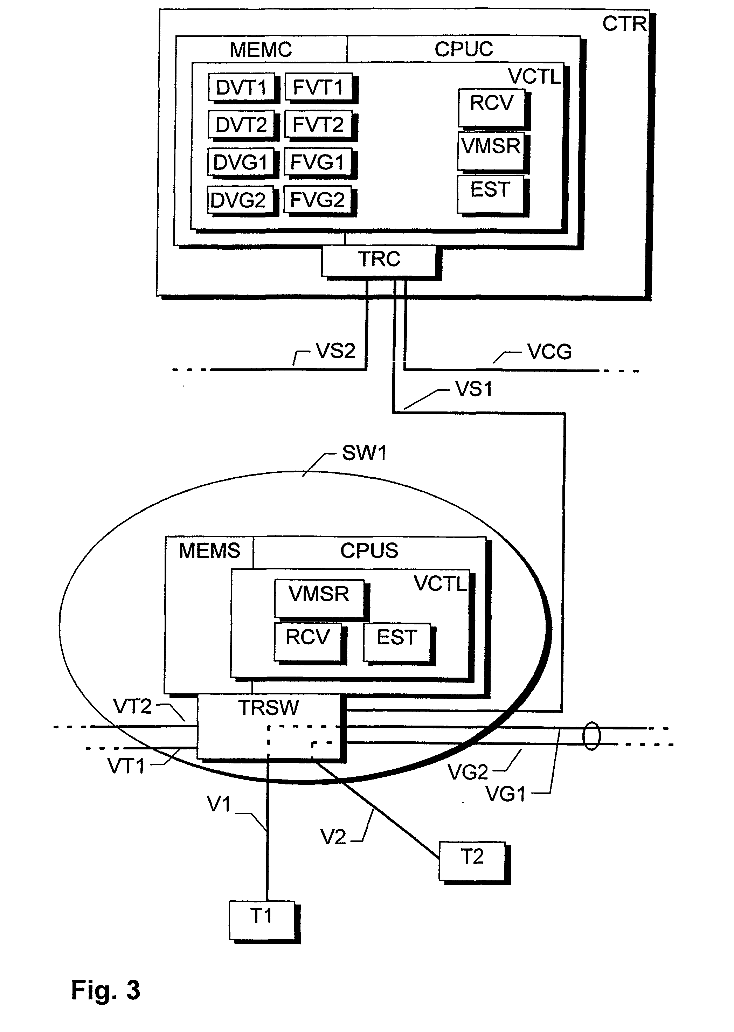

- Fig. 3: zeigt ebenfalls den Netzknoten SW1, der jedoch im Vergleich zu Fig. 2 eine modifizierte Funktionsweise aufweist, sowie eine Netzsteuerungseinrichtung CTR des Netzwerkes NET, die zur erfindungsgemäßen Verbindungssteuerung von auf dem Netzwerk NET aufgebauten Verbindungen vorgesehen ist und unter anderem mit dem Netzknoten SW1 zusammenwirkt.

Das Netzwerk NET enthält beim Ausführungsbeispiel ein geschaltetes Kommunikationsnetzwerk PSTN sowie ein paketvermitteltes Datennetz INT. Bei dem Kommunikationsnetz PSTN kann es sich beispielsweise um ein öffentliches Telefonnetz, zum Beispiel ein ISDN-Telefonnetz (ISDN = Integrated Services Digital Network) und/oder ein Mobilfunknetz, handeln. Das Datennetz INT kann beispielsweise das Internet sein oder ein sonstiges paketvermitteltes Datennetzwerk, wobei verschiedene physikalische Netzwerke zugrunde liegen können, beispielsweise ein Ethernet und/oder ein ATM-Netzwerk (ATM = Asynchronous Transfer Mode). Bei dem Netzwerk NET sowie dessen Teilnetzen PSTN und INT kann es sich aber auch um lokale Netzwerke, beispielsweise LANs (LAN = Local Area Network) oder Wide Area Networks (WAN) handeln.

Das Kommunikationsnetz PSTN kann prinzipiell auch auf einem Datennetzwerk basieren, das zwar an sich paketvermittelt ist, auf dem aber logische Kanäle mit einer vorbestimmten und durch das jeweilige Datennetzwerk garantierten Datenrate eingerichtet werden können, wobei die logischen Kanäle dann sozusagen "geschaltet" sind. Dies ist beispielsweise bei einem ATM-Netz möglich. Jedenfalls stellt das Kommunikationsnetz PSTN garantierte Dienstqualitäten (Quality of Service = QoS) mit garantierten Datenraten zur Übertragung von Daten zur Verfügung und bietet zweckmäßigerweise Sicherheit gegen unbefugten Zugriff auf die derart übertragenen Daten. Bei einer weiteren vorteilhaften Lösung ist das Kommunikationsnetz PSTN ein so genanntes Labelswitching-Netzwerk, beispielsweise ein Multiprotocol-Labelswitching (MPLS)-Netzwerk, wobei die Verbindungen mit gesicherter Dienstqualität dann über so genannte Labelswitching-Tunnel bzw. MPLS-Tunnel führen.

Von dem Kommunikationsnetzwerk PSTN sind Netzknoten SW1, SW2 sowie eine Netzsteuereinrichtung CTR gezeigt, die beispielhaft für weitere, nicht dargestellte Netzwerkeinrichtungen des Kommunikationsnetzes PSTN stehen. Bei den Netzknoten SW1 und SW2 kann es sich beispielsweise um Vermittlungsstellen, auch Mobilfunk-Vermittlungsstellen, handeln. Die Netzsteuereinrichtung CTR kann ein Bestandteil eines Network-Managementsystems sein, das zur Steuerung der Einrichtungen des Kommunikationsnetzes PSTN vorgesehen ist. Im vorliegenden Fall steuert die Netzsteuereinrichtung Verbindungen, die von den Netzknoten SW1, SW2 aufgebaut, unterhalten und wieder abgebaut werden

Von dem Datennetz INT sind exemplarisch für weitere Einrichtungen lediglich Datenserver CS1, CS2 gezeigt, von denen Daten, beispielsweise Videosequenzen, Sprachsequenzen, Internetseiten oder dergleichen, abgerufen werden können. Ein Gateway GW verbindet das Kommunikationsnetz PSTN mit dem Datennetz INT. Das Gateway GW führt gegebenenfalls erforderliche Datenkonvertierungen, Protokollkonvertierungen und dergleichen durch.

Die Netzknoten SW1, SW2, die Netzsteuereinrichtung CTR sowie das Gateway GW enthalten Steuermittel CPUS, CPUC, CPUG, bei denen es sich beispielsweise um einzelne Prozessoren oder um Prozessoranordnungen handeln kann, Speichermittel MEMS, MEMC, MEMG, bei denen es sich beispielsweise um Festplattenlaufwerke, RAM-Bausteine oder dergleichen handeln kann, sowie Verbindungsmittel TRSW, TRC, TRG, die zum Aufbau von Daten und/oder Signalisierungsverbindungen geeignet sind. Die Verbindungsmittel TRSW und TRG können auch beispielsweise ein Koppelnetzwerk oder eine sonstige Schaltmatrix enthalten. Weitere Bausteine der Netzknoten SW1, SW2 sowie der Netzsteuereinrichtung CTR und dem Gateway GW, beispielsweise Ein- und Ausgabemittel, Überwachungsbaugruppen oder dergleichen, sind aus Gründen der Vereinfachung nicht gezeigt. Jedenfalls werden auch die Netzknoten SW1, SW2, die Netzsteuereinrichtung CTR und das Gateway GW durch Programmmodule gesteuert, die durch die Steuermittel CPUS, CPUC, CPUG ausgeführt werden. Als Beispiel für ein solches Programmmodul ist bei dem Netzknoten SW1 sowie bei der Netzsteuereinrichtung CTR ein Verbindungssteuermodul VCTL eingezeichnet.

Die Teilnehmer-Einrichtungen T1, T2 sind an den Netzknoten SW1 über Verbindungen V1, V2 und die Teilnehmer-Einrichtungen T3, T4, T5 über Verbindungen V3, V4, V5 an den Netzknoten SW2 angeschlossen. Die Verbindungen V1 bis V5 sind leitungsgebunden oder drahtlos, wobei es sich beispielsweise um Teilnehmer-Anschlussleitungen oder Funkstrecken handeln kann, die jeweils über weitere, nicht dargestellte Zugangseinrichtungen des Kommunikationsnetzes PSTN führen können, beispielsweise Vorfeldeinrichtungen oder Bay-Stations. Die Verbindungen V1 bis V5 können jeweils mehrere Übertragungskanäle enthalten. Beispielsweise kann die Verbindung V1 eine ISDN-Teilnehmer-Anschlussleitung sein, die zwei B-Kanäle zur Sprach- und Datenübertragung sowie einen D-Kanal zu Signalisierungszwecken und erforderlichenfalls zur Datenübertragung enthält. Bei der Verbindung V2 kann es sich beispielsweise um eine UMTS-Funkstrecke handeln, auf der mehrere Sprach-, Bild- und Datenkanäle dauerhaft oder auf Bedarf auf- und abbaubar sind.

Bei den Teilnehmer-Einrichtungen T1 bis T5 kann es sich beispielsweise um Personal Computer, Telefon-Endgeräte, Mobilfunk-Endgeräte, PDAs (Personal Digital Assistant) oder dergleichen handeln. Die Teilnehmer-Einrichtungen T1 bis T5 sind aus funktionaler Sicht jeweils gleichartig aufgebaut und enthalten ein zentrales Steuermittel CPUT, bei dem es sich beispielsweise um einen oder mehrere Prozessoren handeln kann, Speichermittel MEMT, beispielsweise RAM-Bausteine (RAM = Random Access Memory) oder magnetische Speicher, zum Beispiel Festplattenlaufwerke oder dergleichen, sowie Verbindungsmittel TRT, bei denen es sich beispielsweise um ein Schnittstellenmodul zur leitungsgebundenen und/oder drahtlosen Kommunikation handelt. Weitere bei der Teilnehmer-Einrichtung T1 gezeigte Funktionsbaugruppen sind ein Anzeigemittel DIS, beispielsweise ein Monitor oder ein LCD-Display (LCD = Liquid Crystal Display), ein Lautsprecher SP, ein Mikrofon MIC sowie Eingabemittel KEY, bei denen es sich beispielsweise um eine Tastatur und/oder eine Maus handelt. Das Steuermittel CPUT steuert die Teilnehmer-Einrichtung T1 unter Mitwirkung von Programmmodulen, die in dem Speichermittel MEMT abgelegt sind, und deren Programmcode durch das Steuermodul CPUT ausgeführt wird. Beispielhaft für weitere, nicht dargestellte Programmmodule sind ein Kommunikationsmodul KOM sowie ein Internet-Browser BRW gezeigt, deren jeweilige Funktion später noch detailliert erläutert wird.

Über das Kommunikationsnetz PSTN können die Teilnehmer-Einrichtungen T1 bis T5 Verbindungen untereinander sowie zum Datennetz INT aufbauen. Dabei sind teilweise garantierte Mindest-Datenraten auf den jeweiligen Verbindungen erforderlich, teilweise auch nicht. Durch seine erfindungsgemäße Funktionsweise sorgt das Kommunikationsnetz PSTN dafür, dass es optimal ausgelastet wird. Dies wird nachfolgend anhand einiger Verbindungsbeispiele zwischen den Teilnehmer-Einrichtungen T1 bis T5 untereinander sowie zum Datennetz INT erläutert.

In einem ersten Szenario fordern die Teilnehmer-Einrichtungen T1, T2 jeweils eine Verbindung zu den Teilnehmer-Einrichtungen T3, T4 bei dem Kommunikationsnetz PSTN an. Für diese Verbindungen ist jeweils eine garantierte Datenrate erforderlich, weil beispielsweise Sprach- und/oder Videodaten in Echtzeit übermittelt werden sollen. Entsprechend den Anforderungen an die Verbindungen baut das Kommunikationsnetz PSTN eine Verbindung V1, VT1, V3 zwischen den Teilnehmer-Einrichtungen T1 und T3 sowie eine Verbindung V2, VT2, V4 zwischen den Teilnehmer-Einrichtungen T2 und T4 auf. Somit können Teilnehmer S1, S3 sowie S2, S4, die den Teilnehmer-Einrichtungen T1, T3 bzw. T2, T4 zugeordnet sind, miteinander sprechen und gegebenenfalls z.B. auch Bild-Telefonie durchführen.

Die Verbindungen VT1, VT2 zwischen den Netzknoten SW1, SW2 führen über eine Querverbindung VTX, z.B. über jeweils einen oder mehrere Übertragungskanäle auf der Querverbindung VTX. Die Verbindungen VT1, VT2 können logische Kanäle oder physikalische Kanäle, aber auch echte physikalische Leitungen sein. Die Übertragungskapazität der Querverbindung VTX ist zu Veranschaulichungszwecken im Ausführungsbeispiel bereits erschöpft. Eine weitere Verbindung kann auf der Querverbindung VTX nicht mehr aufgebaut werden. Bei der Querverbindung VTX kann es sich um eine unmittelbare Leitungsverbindung zwischen den Netzknoten SW1, SW2 handeln oder auch um eine Verbindung, die über weitere Vermittlungsstellen, beispielsweise Fern-Vermittlungsstellen, oder über ein nicht dargestelltes Übertragungsnetzwerk, z.B. ein SDH-Netzwerk (SDH = Synchronous Digital Hierarchie) führen kann. Jedenfalls könnte beim aktuellen Szenario ein Teilnehmer S5 mit seiner Teilnehmer-Einrichtung T5 beim Kommunikationsnetz PSTN, sofern es als konventionelles Kommunikationsnetz ausgelegt wäre, keine Verbindung mehr zum Datennetz INT aufbauen, da hierfür eine Querverbindung zwischen den Netzknoten SW2, SW1 erforderlich ist. Das erfindungsgemäß arbeitende Kommunikationsnetz PSTN hingegen ermöglicht der Teilnehmer-Einrichtung T5, auf einer gestrichelt eingezeichneten Verbindung VADD Daten an das Datennetzwerk INT zu senden und Daten von diesem zu empfangen. Hierfür wird ein Anteil der für die Verbindung VT1 garantierten Datenrate und/oder ein Anteil der für die Verbindung VT2 garantierten Datenrate verwendet, soweit diese Anteile jeweils nicht durch die Teilnehmer-Einrichtungen T1 bis T4 genutzt werden. Beispielsweise ist es denkbar, dass bei einer Videoübertragung nicht über die gesamte Verbindungszeit Videosequenzen übertragen werden, sondern abschnittsweise Standbilder. Ferner können bei einer Gesprächsverbindung Gesprächspausen auftreten. Jedenfalls ermittelt das Kommunikationsnetz PSTN nicht genutzte Anteile von garantierten Datenraten.

Hierfür sind in den Netzknoten SW1, SW2 Verbindungssteuermodule VCTL vorgesehen, von denen das durch den Netzknoten SW1 ausgeführte Verbindungssteuermodul VCTL in Fig. 2 detailliert dargestellt ist.

Von dem Verbindungssteuermodul VCTL sind lediglich einige wesentliche Funktionsbaugruppen gezeigt, bei denen es sich beispielsweise um Programmfunktionen oder -routinen handeln kann. Das Verbindungssteuermodul VCTL enthält eine Verbindungsfunktion EST, die als Verbindungsmittel zum Aufbau von Verbindungen durch den Netzknoten SW1 dient. Beim Aufbau einer Verbindung trägt die Verbindungsfunktion EST die jeweils für diese benötigte garantierte Datenrate in den Speicher MEMS ein. Beispielsweise sind für die Verbindungen VT1, VT2 garantierte Datenraten DVT1, DVT2 vermerkt. Eine Messfunktion VMSR überwacht, ob diese garantierte Datenrate auf den jeweiligen Verbindungen VT1, VT2 tatsächlich benötigt wird. Dazu zählt die Messfunktion VMSR beispielsweise Datenpakete, die pro Zeiteinheit auf den Verbindungen VT1, VT2 übermittelt werden. Es ist auch denkbar, dass die Messfunktion VMSR Inhalte der auf diesen Verbindungen VT1, VT2 übermittelten Datenpakete analysiert und beispielsweise feststellt, dass ein Anteil der Datenpakete leer ist. Jedenfalls vermerkt die Messfunktion VMSR Anteile FVT1, FVT2 an den garantierten Datenraten DVT1, DVT2, die momentan nicht genutzt werden. Die Anteile FVT1, FVT2 werden dann für weitere Datenübertragungen bereitgestellt.

Die Anteile FVT1, FVT2 können von einer Multiplexer- und/oder Demultiplexer-Baugruppe, die im Folgenden verkürzt als Multiplexer MUX bezeichnet wird, dazu verwendet werden, Datenpakete in auf den Verbindungen VT1, VT2 übertragene Datenströme einzufügen bzw. wieder aus diesen zu entnehmen. Derart zusätzlich in einen Datenstrom eingefügte Datenpakete können durch eine Identifizierer gekennzeichnet sein, so dass die jeweils empfangende Gegenstelle die zusätzlich in den Datenstrom eingefügten Datenpakete ermitteln und wieder aus diesem entnehmen kann.

Im vorliegenden Fall sind die Netzknoten SW1, SW2 gleichartig aufgebaut, das heißt, sie verfügen jeweils über das Verbindungssteuermodul VCTL sowie über den (De-)Multiplexer MUX. Daher kann die Teilnehmer-Einrichtung T5 trotz der bereits für die Teilnehmer-Einrichtungen T3, T4 eingerichteten Verbindungen VT1, VT2 eine Verbindung zum Datennetzwerk INT aufbauen. Das Verbindungssteuermodul VCTL des Netzknotens SW2 fügt an das Datennetzwerk INT gerichtete Datenpakete in auf den Verbindungen VT1, VT2 übertragene Datenströme ein, sofern diese lückenhaft sind und/oder leere Datenpakete enthalten. Wenn beispielsweise auf der Verbindung VT2 eine Gesprächspause auftritt, die garantierte Datenrate DVT2 also nicht vollständig genutzt wird, ermittelt das Verbindungssteuermodul VCTL des Netzknotens SW2 den dadurch frei werdenden Anteil FVT2 und fügt von der Teilnehmer-Einrichtung T5 an das Datennetz INT gesendete Datenpakete, bei denen es sich vorzugsweise um verbindungslose Datenpakete handelt, in den auf der Verbindung VT2 gesendeten Datenstrom ein. Dazu wird der Multiplexer MUX entsprechend durch das Verbindungssteuermodul VCTL angesteuert. Der (De-)Multiplexer MUX des Netzknotens SW1 entnimmt diese Datenpakete wieder dem Datenstrom und leitet sie auf einer Verbindung VG2 an das Gateway GW weiter. Dieses leitet dann die Datenpakete beispielsweise an den Datenserver CS2 weiter. Beispielsweise enthalten die Datenpakete eine Anforderung an den Datenserver CS1, Daten D12 und/oder Daten D11 an die Teilnehmer-Einrichtung T5 zu senden.

Bei den Daten D11, D12 kann es sich beispielsweise um Internetseiten, Programmdateien oder dergleichen handeln. Der Datenserver CS1 überträgt dann die Daten D11, D12 über eine Verbindung VI1 des Datennetzes INT, die über nicht dargestellte Router, Switches und dergleichen führen kann, wieder an das Gateway GW, welches die Daten D11, D12 über die Verbindung VG2 an den Netzknoten SW1 weiterleitet. Dieser hat dann die Aufgabe, die jeweiligen Daten D11, D12 auf den an sich durch die Teilnehmer-Einrichtung T1, T2 blockierten Verbindungen VT1, VT2 an den Netzknoten SW2 zu übertragen. Der Netzknoten SW1 ermittelt, inwieweit die garantierten Datenraten DVT1, DVT2 nicht genutzt werden und dementsprechend freie Anteile FVT1, FVT2 vorhanden sind.

Es ist auch möglich, dass der Netzknoten SW1 jeweils Summen aus den garantierten Datenraten DVT1, DVT2 bildet und/oder jeweils Summen der nicht genutzten Anteile bildet. Beispielsweise ist ein nicht genutzter Anteil FVT12 in Fig. 2 gezeigt, der als Summe aus den nicht genutzten Anteilen FVT1, FVT2 gebildet ist. Je nach freien Anteilen FVT1, FVT2 bzw. FVT12 fügt der Multiplexer MUX des Netzknotens SW1 Datenpakete der Daten D11, D12 in Datenströme auf den Verbindungen VT1, VT2 ein, welche der (De-)Multiplexer MUX des Netzknotens SW2 wieder aus den jeweiligen Datenströmen entnimmt und an die Teilnehmer-Einrichtung T5 weitersendet.

Die nicht genutzten Anteile FVT1, FVT2 an den garantierten Datenraten DVT1, DVT2 können auch seitens der Teilnehmer-Einrichtungen T1 bis T5 ermittelt und den Netzknoten SW1, SW2 mitgeteilt werden. Aber auch bei dieser nachfolgend beschriebenen Funktionsweise ist es möglich, dass die Netzknoten SW1, SW2 bzw. deren Verbindungssteuermodule VCTL die tatsächlich durch die Teilnehmer-Einrichtungen T1 bis T4 genutzten Anteile an den jeweils für diese garantierten Datenraten durch die Messfunktion VMSR messen oder jedenfalls überprüfen.

Beim nachfolgend beschriebenen zweiten Szenario fordern die Teilnehmer-Einrichtungen T1, T2 bei den Datenservern CS1 bzw. CS2 jeweils Videosequenzen an, die in Daten D11, D21 enthalten sind. Dazu fordern die Teilnehmer-Einrichtungen T1, T2 bei dem Kommunikationsnetz PSTN jeweils Verbindungen mit garantierten, vorliegend vergleichsweise hohen Datenraten, die für eine Bildübertragung erforderlich sind, zum Datennetz INT an. Dementsprechend wird von der Teilnehmer-Einrichtung T1 eine Verbindung V1, VG1, VI1 zum Datenserver CS1 und von der Teilnehmer-Einrichtung T2 eine Verbindung V2, VG2, VI2 zum Datenserver CS2 aufgebaut. Die Verbindungsanforderung wird seitens der Teilnehmer-Einrichtung T1 durch einen Browser BRW erzeugt, der zur Anzeige der Videodaten geeignet ist. Der Browser BRW ist ein so genannter multimodaler Browser, der nicht nur durch Steuerbefehle CMD, die von der Tastatur KEY gegeben werden, gesteuert werden kann, sondern auch durch Daten DAT2, die als Sprachbefehle über das Mikrofon MIC eingegeben werden. Weitere Steuerungsmöglichkeiten für den multimodalen Browser BRW sind beispielsweise dadurch gegeben, dass Bedienhandlungen des Teilnehmers S1 durch eine nicht dargestellte Videokamera oder dergleichen erfasst und von dem Browser BRW interpretiert werden. Zudem ist der Browser BRW in der Lage, Daten, unter anderem Videodaten, auf unterschiedlichen Ausgabemedien auszugeben. Wenn der Teilnehmer S1 beim Browser BRW die Videosequenz anfordert, beispielsweise durch Eingeben eines entsprechenden Steuerbefehls CMD, sendet dieser eine Anforderung an das Kommunikationsmodul KOM, eine für Videodaten geeignete Verbindung zum jeweiligen Lieferanten für die Videodaten, vorliegend dem Datenserver CS1, aufzubauen. Das Kommunikationsmodul KOM sendet daraufhin eine entsprechende Verbindungsaufbauanforderung an den Netzknoten SW1, in der die für die Videoübertragung notwendige Datenrate angegeben ist. Dieser baut dann die weitere Verbindung zum Gateway VG1 auf. Die Verbindung VG1 kann anders als in der Figur dargestellt über weitere Netzeinrichtungen, Übertragungseinrichtungen oder dergleichen führen. Jedenfalls wird die auf der Verbindung VG1 garantierte Datenrate DVG1 durch das Verbindungssteuermodul VCTL vermerkt. Der Datenserver CS1 kann somit im Rahmen der garantierten Datenrate die Daten D11 der Videosequenz störungsfrei und ohne Unterbrechungen an die Teilnehmer-Einrichtung T1 übertragen, so dass der Browser BRW aus den Daten D11 Sprachausgabedaten DAT1 und Bildausgabedaten DAT3 gewinnen und an den Lautsprecher SP bzw. die Anzeigeeinrichtung DIS ausgeben kann.

Wenn der Teilnehmer S1 jedoch die Wiedergabe der Videosequenz anhält, beispielsweise weil er sich kurzzeitig von seiner Teilnehmer-Einrichtung T1 entfernen möchte, so gibt er beispielsweise einen entsprechenden Steuerbefehl über das Mikrofon MIC ein, worauf der Browser BRW einen Unterbrechungsbefehl an den Datenserver CS1 sendet. Zusätzlich sendet das Kommunikationsmodul KOM einen Steuerbefehl an das Verbindungssteuermodul VCTL, in welchem es die kurzzeitige Unterbrechung der Videosequenz anzeigt. Dabei ist es möglich, dass das Kommunikationsmodul KOM vom Browser BRW gesendete Steuerbefehle überwacht und aus diesen ermittelt, welche Datenrate jeweils erforderlich ist und/oder dass der Browser BRW das Kommunikationsmodul KOM instruiert, welche Datenrate tatsächlich erforderlich ist. Hierzu sei auch bemerkt, dass das Kommunikationsmodul KOM in den Browser BRW integriert sein kann. Jedenfalls vermerkt das Verbindungssteuermodul VCTL, dass nicht mehr die garantierte Datenrate DVG1 erforderlich ist, sondern dass ein Anteil FVG1 dieser Datenrate für eine anderweitige Datenübertragung bereitsteht.

Der frei gewordene Anteil FVG1 kann beispielsweise für eine Übertragung von Daten D22 durch den Datenserver CS2 an die Teilnehmer-Einrichtung T3 genutzt werden. Hierfür ist beispielsweise in dem Gateway GW, genauer gesagt in dessen Verbindungsmittel TRG, ein nicht dargestellter Multiplexer/Demultiplexer vorgesehen, der, wie bereits anhand der Netzknoten SW1, SW2 beschrieben, Datenpakete in Datenströme einfügen und/oder aus diesen entnehmen kann.

Weiter ist es möglich, dass auch die Teilnehmer-Einrichtung T2 bei dem Verbindungssteuermodul VCTL einen nicht genutzten Anteil FVG2 an der garantierten Datenrate DVG2 sozusagen abmeldet. Wenn von der Teilnehmer-Einrichtung T1 anschließend wieder die vollständige Datenrate DVG1 benötigt wird, beispielsweise weil der Teilnehmer S1 den Rest der fehlenden Videosequenz abruft, oder weil er Sprachdaten bei dem Datenserver CS1 abruft, so teilt dies der Browser BRW bzw. das Kommunikationsmodul KOM dem Netzknoten SW1 mit, wobei dessen Verbindungssteuermodul den entsprechenden Befehl über eine Empfangsfunktion RCV empfängt und entsprechend der Instruktion den Wert FVG1 verringert, gegebenenfalls sogar auf Null setzt.

Die Netzknoten SW1, SW2 sowie das Gateway GW können die entsprechenden, nicht genutzten Anteile FVT1, FVT2, FVG1, FVG2 beispielsweise im Rahmen eines Signalisierungsprotokolles einander übermitteln. Die jeweiligen vorgenannten Daten werden von den Verbindungssteuermodulen gespeichert, so dass nicht genutzte Anteile an garantierten Datenraten für anderweitige Datenübertragungen genutzt werden können. Dies könnte man auch als eine dezentrale Lösung bezeichnen, bei der die Netzsteuerungseinrichtung CTR prinzipiell nicht erforderlich ist.

Bei einer im Folgenden dargestellten Ausführungsform der Erfindung mit "zentraler" Steuerung ist die Netzsteuerungseinrichtung CTR jedoch vorgesehen. Dabei übermitteln die Netzknoten SW1, SW2 sowie das Gateway GW die jeweils erforderlichen garantierten Datenraten DVT1, DVT2, DVG1, DVG2 sowie die jeweils nicht genutzten Anteile FVT1, FVT2, FVG1, FVG2 an die Netzsteuereinrichtung CTR auf Verbindungen VS1, VS2 bzw. VCG. Die Netzsteuereinrichtung dient somit in einem ersten Schritt zunächst sozusagen als gemeinsame Datenbank, von der die vorbezeichneten Datenraten von den Netzknoten SW1, SW2 bzw. dem Gateway GW abrufbar sind. In dem in Fig. 3 dargestellten Beispiel sind daher die jeweiligen Datenraten nur im Verbindungssteuermodul VCTL der Netzsteuerungseinrichtung CTR vermerkt, nicht jedoch im Verbindungssteuermodul VCTL des Netzknotens SW1. Dieses verfügt dementsprechend lediglich über die Empfangsfunktion RCV, die Messfunktion VMSR sowie die Verbindungsfunktion EST.

Es ist jedoch auch möglich, dass die Netzsteuerungseinrichtung CTR nicht nur garantierte Datenraten sowie von diesen jeweils nicht genutzte Anteile abspeichert, sondern zudem die Netzknoten SW1, SW2 sowie das Gateway GW zur anderweitigen Nutzung nicht genutzter Anteile an garantierten Datenraten instruiert. Die Netzsteuerungseinrichtung CTR hat sozusagen einen Überblick über die Lastverhältnisse im Kommunikationsnetz PSTN und kann somit für eine optimale Auslastung der vorhandenen Netzkapazität sorgen.

Anknüpfend an das vorherige Beispiel, bei dem die Teilnehmer-Einrichtung T1 einen momentan nicht genutzten Anteil an der garantierten Datenrate DVG1 bei dem Netzknoten SW1 sozusagen abgemeldet hat, weil der Teilnehmer S1 eine Videosequenz unterbrochen hat, ist auch folgender Ablauf möglich: Der Netzknoten SW1 meldet den nicht genutzten Anteil FVG1 unmittelbar an die Netzsteuerungseinrichtung CTR. Deren Verbindungssteuermodul VCTL empfängt die Mitteilung über ihre Empfangsfunktion RCV und vermerkt deren Inhalt, also den Wert FVG1 im Speicher MEMC. Zudem instruiert die Verbindungsfunktion VMSR die an der Verbindung VG1 beteiligten Netzwerkeinrichtungen, den Netzknoten SW1 sowie das Gateway GW, dass der nicht genutzte Anteil FVG1 für eine anderweitige Datenübertragung genutzt werden kann.

Bei allen vorgenannten Beispielen löschen die Verbindungssteuermodule VCTL die jeweils für die Verbindungen VT1, VT2, VG1, VG2 vermerkten garantierten Datenraten DVT1, DVT2, DVG1, DVG2, wenn die jeweiligen Verbindungen wieder abgebaut werden.

Zur Übertragung der Daten, die mit einer garantierten Datenrate übertragen werden, wird vorzugsweise ein verbindungsorientiertes Protokoll verwendet. Beispielsweise können die Videodaten, die vom Datenserver CS1 an die Teilnehmer-Einrichtung T1 gesendet werden, mit dem Transmission Control Protocol/Internet Protocol (TCP/IP) übertragen werden. Soweit lediglich nicht genutzte Anteile an garantierten Datenraten zur Datenübertragung bereitstehen, wird vorzugsweise ein verbindungsloses Kommunikationsprotokoll verwendet. Beispielsweise könnten die Daten, die während des Bestehens der Verbindungen VG1, VG2 zwischen Datenserver CS1 und Teilnehmer-Einrichtung T1 bzw. Datenserver CS2 und Teilnehmer-Einrichtung T2 von dem Datenserver CS2 an die Teilnehmer-Einrichtung T3 gesendet werden, für das so genannte UDP-Protokoll verwendet (User Datagram Protocol).

Es versteht sich, dass auch beliebige Kombinationen der in den Ansprüchen sowie in der Beschreibung angegebenen Maßnahmen und Anordnungen möglich sind. Ferner sind beliebige Ausführungsformen der Erfindung möglich.

Beispielsweise müssen die nicht genutzten Anteile FVT1, FVT2, FVG1, FVG2 nicht durch die Verbindungssteuermodule VCTL eigens vermerkt werden. Es genügt auch, wenn lediglich die gesamte Übertragungskapazität einer Verbindung bekannt ist sowie die Summe der Anteile an den garantierten Datenraten, die tatsächlich von der Übertragungskapazität genutzt werden, so dass ein freier, für weitere Datenübertragungen nutzbarer Anteil an der Übertragungskapazität ermittelbar ist.

Das Kommunikationsmodul KOM kann einen Bestandteil der Verbindungsmittel TRT bilden und beispielsweise auch als eine Hardware-Komponente ausgeführt sein und/oder zumindest teilweise durch einen dem Verbindungsmittel TRT zugeordneten Prozessor ausgeführt werden. Analoges gilt für die Verbindungssteuermodule VCTL, die in den Verbindungsmitteln TRSW, TRC, TRG enthalten sein können.

Es kann eine Verhandlungsprozedur zwischen einerseits den Teilnehmer-Einrichtungen T1, T2 bzw. den von diesen ausgeführten Kommunikationsmodulen KOM und andererseits dem Netzwerk NET bzw. dessen Netzknoten SW1, SW2 und/oder der Netzsteuerungseinrichtung CTR (oder den von diesen jeweils ausgeführten Verbindungssteuermodulen VCTL) durchgeführt werden, bei dem die jeweils nicht genutzten Anteile FVT1, FVT2, FVG1, FVG2 interaktiv zwischen den beteiligten Einrichtungen bzw. Programm-Moduien jeweils ausgehandelt werden.

Das Netzwerk NET kann eine Gebührengutschrift für die Teilnehmer-Einrichtungen T1 - T5 vornehmen, soweit diese jeweils nicht genutzte Anteile FVT1, FVT2, FVG1, FVG2 an garantierten Datenraten temporär für andere Datenübertragungen freigeben.

Es ist auch möglich, dass das Netzwerk NET Datenübertragungen zu besonders niedrigen Gebühren durchführt, wenn die jeweiligen Datenübertragungen auf den ansonsten nicht genutzten Anteilen FVT1, FVT2, FVG1, FVG2 an garantierten Datenraten erfolgt, die jeweilige Datenübertragung mithin nur dann durchgeführt wird, wenn die nicht genutzten Anteilen FVT1, FVT2, FVG1, FVG2 an garantierten Datenraten für die jeweilige zu niedrigen Gebühren durchgeführte Datenübertragung bereitstehen.

## Patentansprüche

1. Verfahren zur Durchführung einer Datenübertragung mit zeitlich veränderlicher Datenrate, bei dem
- eine Teilnehmer-Einrichtung (T1-T5) bei einer Netzwerkeinrichtung (SW1, SW2) eines Netzwerks (NET) eine Verbindung zu einem Kommunikationspartner (T1-T5; CS1, CS2) mit einer garantierten Datenrate (DVT1, DVT2, DVG1, DVG2) anfordert,
- das Netzwerk (NET) die Verbindung zu dem Kommunikationspartner (T1-T5; CS1, CS2) aufbaut und dafür die garantierte Datenrate (DVT1, DVT2, DVG1, DVG2) bereitstellt,
- die Teilnehmer-Einrichtung (T1-T5) eine erste Datenübertragung auf der Verbindung zu dem Kommunikationspartner (T1-T5; CS1, CS2) durchführt,
- die Verbindung abgebaut wird,
und bei dem während des Bestehens der Verbindung mindestens einmal die folgenden Schritte durchgeführt werden:
- Ermitteln eines durch die Teilnehmer-Einrichtung (T1-T5) momentan nicht genutzten Anteils (FVT1, FVT2, FVG1, FVG2) an der garantierten Datenrate (DVT1, DVT2, DVG1, DVG2),
- Freigeben des nicht genutzten Anteils (FVT1, FVT2, FVG1, FVG2) für zumindest eine zweite Datenübertragung, und
- erforderlichenfalls erneutes Bereitstellen der gesamten garantierten Datenrate (DVT1, DVT2, DVG1, DVG2) einschließlich des zuvor freigegebenen Anteils (FVT1, FVT2, FVG1, FVG2) für die Teilnehmer-Einrichtung (T1-T5),
**dadurch gekennzeichnet, dass** die Teilnehmer-Einrichtung (T1-T5) und/oder ein durch diese ausgeführtes Programm-Modul (KOM, BRW) die jeweils tatsächlich erforderliche und/oder die jeweils momentan nicht genutzte Datenrate (FVT1, FVT2, FVG1, FVG2) ermitteln und dem Netzwerk (NET), insbesondere der Netzwerkeinrichtung (SW1, SW2), mitteilen.

2. Verfahren nach Anspruch 1, **dadurch gekennzeichnet, dass** das Netzwerk (NET), insbesondere die Netzwerkeinrichtung (SW1, SW2), die jeweils tatsächlich erforderliche und/oder die jeweils momentan nicht genutzte Datenrate (FVT1, FVT2, FVG1, FVG2) ermittelt.

3. Verfahren nach Anspruch 1, **dadurch gekennzeichnet, dass** im Rahmen der ersten Datenübertragung übertragene Daten als Daten mit einer hohen Dienstqualität, insbesondere als Echtzeitdaten, übertragen werden.

4. Verfahren nach Anspruch 1, **dadurch gekennzeichnet, dass** im Rahmen der zweiten Datenübertragung übertragene Daten als Daten mit einer Vergleich zu den im Rahmen der ersten Datenübertragung übertragenen Daten geringeren Dienstqualität übertragen werden.

5. Verfahren nach Anspruch 1, **dadurch gekennzeichnet, dass** die im Rahmen der ersten Datenübertragung übertragenen Daten mit einem verbindungsorientierten Protokoll übertragen werden und/oder dass die im Rahmen der zweiten Datenübertragung übertragenen Daten mit einem verbindungslosen Protokoll übertragen werden.

6. Verfahren nach Anspruch 1, **dadurch gekennzeichnet, dass** das Netzwerk (NET) zumindest einen Abschnitt (VT1, VT2, VG1, VG2) der Verbindung auf einem geschalteten Verbindungsweg aufbaut.

7. Kommunikationsmodul (KOM; TRT) für eine Teilnehmer-Einrichtung (T1-T5) zur Durchführung einer Datenübertragung mit zeitlich veränderlicher Datenrate, mit Kommunikationsmitteln zum Anfordern einer Verbindung zu einem Kommunikationspartner (T1-T5; CS1, CS2) mit einer garantierten Datenrate (DVT1, DVT2, DVG1, DVG2) bei einer Netzwerkeinrichtung (SW1, SW2) eines Netzwerks (NET), zur Durchführung einer ersten Datenübertragung auf der Verbindung zu dem Kommunikationspartner (T1-T5; CS1, CS2) und zum Abbauen der Verbindung, bei dem die Kommunikationsmittel zum Ermitteln eines während des Bestehens der Verbindung momentan nicht genutzten Anteils (FVT1, FVT2, FVG1, FVG2) an der garantierten Datenrate (DVT1, DVT2, DVG1, DVG2) und zum Melden des Anteils (FVT1, FVT2, FVG1, FVG2) an das Netzwerk (NET), insbesondere an die Netzwerkeinrichtung (SW1, SW2), ausgestaltet sind, so dass das Netzwerk (NET) bzw. die Netzwerkeinrichtung (SW1, SW2) den nicht genutzten Anteil (FVT1, FVT2, FVG1, FVG2) für zumindest eine zweite Datenübertragung freigeben und bereitstellen kann **dadurch gekennzeichnet, daß** die Kommunikationsmittel weiter so ausgestaltet sind, dass sie und/oder ein durch diese ausgeführtes Programm-Modul (KOM, BRW) die jeweils tatsächlich erforderliche und/oder die jeweils momentan nicht genutzte Datenrate (FVT1, FVT2, FVG1, FVG2) ermitteln und dem Netzwerk (NET), insbesondere der Netzwerkeinrichtung (SW1, SW2), mitteilen.

8. Teilnehmer-Einrichtung (T1-T5) mit einem Kommunikationsmodul (KOM, TRT) nach Anspruch 7.

9. Verbindungssteuermodul (VCTL; TRSW) für eine Netzwerkeinrichtung (SW1, SW2) eines Netzwerks (NET) zur Durchführung einer Datenübertragung mit zeitlich veränderlicher Datenrate, mit Verbindungsmitteln zum Empfangen einer Anforderung einer Teilnehmer-Einrichtung (T1-T5) zum Aufbau einer Verbindung zu einem Kommunikationspartner (T1-T5; CS1, CS2) mit einer garantierten Datenrate (DVT1, DVT2, DVG1, DVG2), zum Bereitstellen der garantierten Datenrate (DVT1, DVT2, DVG1, DVG2) auf der Verbindung und zum Freigeben der garantierten Datenrate (DVT1, DVT2, DVG1, DVG2) beim Abbauen der Verbindung, bei dem die Verbindungsmittel zum Ermitteln eines durch die Teilnehmer-Einrichtung (T1-T5) momentan nicht genutzten Anteils (FVT1, FVT2, FVG1, FVG2) an der garantierten Datenrate (DVT1, DVT2, DVG1, DVG2) während des Bestehens der Verbindung, zum Freigeben des nicht genutzten Anteils (FVT1, FVT2, FVG1, FVG2) für zumindest eine zweite Datenübertragung und erforderlichenfalls zum erneuten Bereitstellen der gesamten garantierten Datenrate (DVT1, DVT2, DVG1, DVG2) einschließlich des zuvor freigegebenen Anteils (FVT1, FVT2, FVG1, FVG2) für die Teilnehmer-Einrichtung (T1-T5) ausgestaltet sind, **dadurch gekennzeichnet, daß** die Verbindungsmittel weiter so ausgestaltet sind, dass sie und/oder ein durch diese ausgeführtes Programm-Modul (KOM, BRW) die jeweils tatsächlich erforderliche und/oder die jeweils momentan nicht genutzte Datenrate (FVT1, FVT2, FVG1, FVG2) ermitteln und dem Netzwerk (NET), insbesondere der Netzwerkeinrichtung (SW1, SW2), mitteilen.

10. Netzwerkeinrichtung (SW1, SW2) mit einem Verbindungssteuermodul nach Anspruch 9.

11. Kommunikationsmodul, insbesondere multimodaler Browser oder zur Zusammenwirkung mit einem solchen ausgestaltetes Kommunikationsmodul, nach Anspruch 7 oder Verbindungssteuermodul nach Anspruch 9, jeweils **dadurch gekennzeichnet, dass** es Programmcode enthält, der von einem Steuermittel einer Teilnehmer-Einrichtung (T1-T5) bzw. einer Netzwerkeinrichtung (SW1, SW2) ausgeführt werden kann.

12. Speichermittel, insbesondere Diskette oder CD-ROM, Digital Versatile Disc, oder Festplattenlaufwerk, mit einem darauf gespeicherten Kommunikationsmodul nach Anspruch 11 und/oder einem darauf gespeicherten Verbindungssteuermodul nach Anspruch 9.

## Claims

1. Method for executing a data transmission with a data rate that is variable in time, in which
- a subscriber terminal (T1-T5) requests at a network facility (SW1, SW2) of a network (NET) a connection to a communication partner (T1-T5): CS1, CS2) with a guaranteed data rate (DVT1, DVT2, DVG1, DVG2),
- the network (NET) sets up the connection to the communication partner (T1-T5; CS1, CS2) and provides the guaranteed data rate (DVT1, DVT2, DVG1, DVG2) for this,
- the subscriber terminal (T1-T5) executes a first data transmission on the connection to the communication partner (T1-T5; CS1, CS2),
- the connection is cleared down,
and in which during the existence of the connection the following steps are executed at least once:
- Detection of a portion (FVT1, FVT2, FVG1, FVG2) of the guaranteed data rate (DVT1, DVT2, DVG1, DVG2) which is not being used by the subscriber terminal (T1-T5) at the time,
- Release of the unused portion (FVT1, FVT2, FVG1, FVG2) for at least one second data transmission, and
- if necessary, renewed provision of the entire guaranteed data rate (DVT1, DVT2, DVG1, DVG2) including the previously released portion (FVT1, FVT2, FVG1, FVG2) for the subscriber terminal (T1-T5),
**characterized in that** the subscriber terminal (T1-T5) and/or a program module (KOM, BRW) executed by this determine the respective actually required data rate and/or the respective currently unused data rate (FVT1, FVT2, FVG1, FVG2) and communicate these to the network (NET), in particular the network facility (SW1, SW2).

2. Method according to Claim 1, **characterized in that** the network (NET), in particular the network facility (SW1, SW2), determines the respective actually required data rate and/or the respective currently unused data rate (FVT1, FVT2, FVG1, FVG2).

3. Method according to Claim 1, **characterized in that** data transmitted within the first data transmission is transmitted as data with a high quality of service, in particular as real-time data.

4. Method according to Claim 1, **characterized in that** data transmitted within the second data transmission is transmitted as data with a lower quality of service in comparison to the data transmitted within the first data transmission.

5. Method according to Claim 1, **characterized in that** the data transmitted within the first data transmission is transmitted with a connection-oriented protocol and/or that the data transmitted within the second data transmission is transmitted with a connectionless protocol.

6. Method according to Claim 1, **characterized in that** the network (NET) sets up at least one section (VT1, VT2, VG1, VG2) of the connection on a switched connection path.

7. Communication module (KOM; TRT) for a subscriber terminal (T1-T5) for execution of a data transmission with a data rate that is variable in time, with communication means for requesting a connection to a communication partner (T1-T5; CS1, CS2) with a guaranteed data rate (DVT1, DVT2, DVG1, DVG2) in a network facility (SW1, SW2) of a network (NET), for executing a first data transmission on the connection to the communication partner (T1-T5; CS1, CS2) and for clearing the connection, in which the communication means are developed to determine a currently unused portion (FVT1, FVT2, FVG1, FVG2) of the guaranteed data rate (DVT1, DVT2, DVG1, DVG2) during the existence of the connection, and to report the portion (FVT1, FVT2, FVG1, FVG2) to the network (NET), in particular to the network facility (SW1, SW2), so that the network (NET) or the network facility (SW1, SW2) can release and make available the unused portion (FVT1, FVT2, FVG1, FVG2) for at least one second data transmission,
**characterized in that** the communication means are further so developed that they and/or a program module (KOM, BRW) executed by these determine the respective actually required data rate and/or the respective currently unused data rate (FVT1, FVT2, FVG1, FVG2) and communicate these to the network (NET), in particular to the network facility (SW1, SW2).

8. Subscriber terminal (T1-T5) with a communication module (KOM, TRT) according to Claim 7.

9. Connection control module (VCTL; TRSW) for a network facility (SW1, SW2) of a network (NET) for executing a data transmission with a data rate that is variable in time, with connection means for receiving a request from a subscriber terminal (T1-T5) for setup of a connection to a communication partner (T1-T5;
CS1, CS2) with a guaranteed data rate (DVT1, DVT2, DVG1, DVG2), for provision of the guaranteed data rate (DVT1, DVT2, DVG1, DVG2) on the connection and for release of the guaranteed data rate (DVT1, DVT2, DVG1, DVG2) on clearing of the connection, in which the connection means are developed for determining a portion (FVT1, FVT2, FVG1, FVG2) of the guaranteed data rate (DVT1, DVT2, DVG1, DVG2) currently unused by the subscriber terminal (T1-T5) during the existence of the connection, for release of the unused portion (FVT1, FVT2, FVG1, FVG2) for at least one second data transmission and if necessary for renewed provision of the entire guaranteed data rate (DVT1, DVT2, DVG1, DVG2) including the previously released portion (FVT1, FVT2, FVG1, FVG2) for the subscriber terminal (T1-T5),
**characterized in that** the connection means are further so developed that they and/or a program module (KOM, BRW) executed by these determine the respective actually required data rate and/or the respective currently unused data rate (FVT1, FVT2, FVG1, FVG2) and communicate these to the network (NET), in particular to the network facility (SW1, SW2).

10. Network facility (SW1, SW2) with a connection control module according to Claim 9.

11. Communication module, in particular a multimodal browser or a communication module developed to cooperate with such, according to Claim 7 or connection control module according to Claim 9, each **characterized in that** it contains program code that can be executed by control means of a subscriber terminal (T1-T5) or of a network facility (SW1, SW2) respectively.

12. Storage means, in particular floppy disk or CD-ROM, Digital Versatile Disc, or hard disk drive, with a communication module according to Claim 11 stored on it and/or a connection control module according to Claim 9 stored on it.

## Revendications

1. Procédé pour réaliser une transmission de données à un débit variable dans le temps avec lequel
- un équipement d'abonné (T1- T5) sur un équipement de réseau (SW1, SW2) d'un réseau (NET) demande une connexion avec un partenaire de communication (T1-T5 ; CS1, CS2) à un débit garanti (DVT1, DVT2, DVG1, DVG2),
- le réseau (NET) établit la connexion avec le partenaire de communication (T1-T5 ; CS1, CS2) et fournit à cet effet le débit garanti (DVT1, DVT2, DVG1, DVG2),
- l'équipement d'abonné (T1 -T5) effectue une première transmission de données sur la connexion avec le partenaire communication (T1 - T5 ; CS1, CS2),
- la connexion est coupée,
et les étapes suivantes sont effectuées au moins une fois pendant la connexion :
- détermination d'une partie (FVT1, FVT2, FVG1, FVG2) du débit garanti (DVT1, DVT2, DVG1, DVG2) momentanément non utilisée par l'équipement d'abonné (T1-T5),
- libération de la partie non utilisée (FVT1, FVT2, FVG1, FVG2) pour au moins une deuxième transmission de données, et
- si nécessaire, nouvelle mise à disposition de l'intégralité du débit garanti (DVT1, DVT2, DVG1, DVG2), y compris la partie (FVT1, FVT2, FVG1, FVG2) préalablement libérée, à l'équipement d'abonné (T1-T5),
**caractérisé en ce que** l'équipement d'abonné (T1-T5) et/ou un module de programme (KOM, BRW) exécuté par celui-ci détermine le débit à chaque fois réellement nécessaire et/ou à chaque fois momentanément non utilisé (FVT1, FVT2, FVG1, FVG2) et le communique au réseau (NET), notamment à l'équipement de réseau (SW1, SW2).

2. Procédé selon la revendication 1, **caractérisé en ce que** le réseau (NET), notamment un équipement de réseau (SW1, SW2) détermine le débit à chaque fois réellement nécessaire et/ou à chaque fois momentanément non utilisé (FVT1, FVT2, FVG1, FVG2).

3. Procédé selon la revendication 1, **caractérisé en ce que** les données transmises dans le cadre de la première transmission de données sont transmises sous la forme de données ayant une qualité de service élevée, notamment en tant que données en temps réel.

4. Procédé selon la revendication 1, **caractérisé en ce que** les données transmises dans le cadre de la deuxième transmission de données sont transmises sous la forme de données ayant une qualité de service inférieure à celle des données transmises dans le cadre de la première transmission de données.

5. Procédé selon la revendication 1, **caractérisé en ce que** les données transmises dans le cadre de la première transmission de données sont transmises avec un protocole en mode connexion et/ou que les données transmises dans le cadre de la deuxième transmission de données sont transmises avec un protocole sans connexion.

6. Procédé selon la revendication 1, **caractérisé en ce que** le réseau (NET) établit au moins une section (VT1, VT2, VG1, VG2) de la connexion sur une voie de connexion commutée.

7. Module de communication (KOM ; TRT) pour un équipement d'abonné (T1-T5) destiné à réaliser une transmission de données à un débit variable dans le temps, comprenant des moyens de communication pour demander une connexion avec un partenaire de communication (T1-T5 ; CS1, CS2) à un débit garanti (DVT1, DVT2, DVG1, DVG2) auprès d'un équipement de réseau (SW1, SW2) d'un réseau (NET), destiné à réaliser une première transmission de données sur la connexion avec le partenaire de communication (T1-T5 ; CS1, CS2) et destiné à couper la connexion, avec lequel les moyens de communication sont configurés pour déterminer une partie (FVT1, FVT2, FVG1, FVG2) du débit garanti (DVT1, DVT2, DVG1, DVG2) momentanément non utilisée pendant la connexion existante et signaler la partie (FVT1, FVT2, FVG1, FVG2) au réseau (NET), notamment à l'équipement de réseau (SW1, SW2), de manière à ce que le réseau (NET) ou l'équipement de réseau (SW1, SW2) puisse libérer et mettre à disposition la partie non utilisée (FVT1, FVT2, FVG1, FVG2) pour au moins une deuxième transmission de données, **caractérisé en ce que** les moyens de communication sont en plus configurés de telle sorte qu'ils et/ou un module de programme (KOM, BRW) exécuté par eux déterminent le débit à chaque fois réellement nécessaire et/ou à chaque fois momentanément non utilisé (FVT1, FVT2, FVG1, FVG2) et le communiquent au réseau (NET), notamment à l'équipement de réseau (SW1, SW2).

8. Équipement d'abonné (T1-T5) comprenant un module de communication (KOM, TRT) selon la revendication 7.

9. Module de commande de connexion (VCTL ; TRSW) pour un équipement de réseau (SW1, SW2) d'un réseau (NET) destiné à réaliser une transmission de données à un débit variable dans le temps, comprenant des moyens de connexion pour recevoir une demande d'un équipement d'abonné (T1-T5) en vue d'établir une connexion avec un partenaire de communication (T1-T5 ; CS1, CS2) à un débit garanti (DVT1, DVT2, DVG1, DVG2), à mettre à disposition le débit garanti (DVT1, DVT2, DVG1, DVG2) sur la connexion et à libérer le débit garanti (DVT1, DVT2, DVG1, DVG2) lors de la coupure de la connexion, avec lequel les moyens de connexion sont configurés pour déterminer une partie (FVT1, FVT2, FVG1, FVG2) du débit garanti (DVT1, DVT2, DVG1, DVG2) momentanément non utilisée par l'équipement d'abonné (T1-T5) pendant l'existence de la connexion, pour libérer la partie non utilisée (FVT1, FVT2, FVG1, FVG2) pour au moins une deuxième transmission de données et, si nécessaire, pour remettre à disposition la totalité du débit garanti (DVT1, DVT2, DVG1, DVG2), y compris la partie (FVT1, FVT2, FVG1, FVG2) préalablement libérée, à l'équipement d'abonné (T1-T5), **caractérisé en ce que** les moyens de connexion sont en plus configurés de telle sorte qu'ils et/ou un module de programme (KOM, BRW) exécuté par eux déterminent le débit à chaque fois réellement nécessaire et/ou à chaque fois momentanément non utilisé (FVT1, FVT2, FVG1, FVG2) et le communiquent au réseau (NET), notamment à l'équipement de réseau (SW1, SW2).

10. Équipement de réseau (SW1, SW2) comprenant un module de commande de connexion selon la revendication 9.

11. Module de communication, notamment navigateur multimodal ou module de communication configuré pour agir conjointement avec ce dernier, selon la revendication 7, ou module de commande de connexion selon la revendication 9, à chaque fois **caractérisé en ce qu'**il contient des codes de programme qui peuvent être exécutés par un moyen de commande d'un équipement d'abonné (T1-T5) ou d'un équipement de réseau (SW1, SW2).

12. Moyen de mémorisation, notamment disquette ou CD-ROM, DVD ou disque dur sur lequel est enregistré un module de communication selon la revendication 11 et/ou sur lequel est enregistré un module de commande de connexion selon la revendication 9.
